## Europäisches Patentamt

## European Patent Office

## Office européen des brevets

(11) Veröffentlichungsnummer: **0 082 920**
**B1**

(19)

(12) # EUROPÄISCHE PATENTSCHRIFT

(45) Veröffentlichungstag der Patentschrift:
24.09.86

(51) Int. Cl.⁴: **B 01 J 19/02,** B 23 K 20/02,
B 23 K 20/16

(21) Anmeldenummer: **82107662.7**

(22) Anmeldetag: **21.08.82**

(54) **Metallbehälter, insbesondere für den chemischen Apparate-bau, und Verfahren zur Herstellung solcher Behälter.**

(30) Priorität: **24.12.81 DE 3151499**

(43) Veröffentlichungstag der Anmeldung:
**06.07.83 Patentblatt 83/27**

(45) Bekanntmachung des Hinweises auf die Patenterteilung:
**24.09.86 Patentblatt 86/39**

(84) Benannte Vertragsstaaten:
**AT BE CH DE FR GB LI**

(56) Entgegenhaltungen:
**EP-A-0 001 173**
**DE-A-1 925 014**
**DE-A-3 115 393**
**DE-B-2 158 541**
**US-A-3 359 624**
**US-A-4 026 583**

(73) Patentinhaber: **Heraeus Elektroden GmbH,
Heraeusstrasse 12 - 14, D-6450 Hanau/Main (DE)**

(72) Erfinder: **Heinke, Harri, Feldstrasse 4, D-6455
Erlensee (DE)**
Erfinder: **Lupton, David, Dr. rer. nat., Am Rain 8,
D-6460 Gelnhausen (DE)**
Erfinder: **Schreiber, Franz, Dr. Dipl.- Ing.,
Rüdigheimerstrasse 8, D-6450 Hanau (DE)**
Erfinder: **Werdecker, Waltraud, Dipl.- Ing., Gustav-
Hoch- Strasse 11, D-6450 Hanau (DE)**

(74) Vertreter: **Heinen, Gerhard, Dr., W.C. Heraeus
GmbH Zentralbereich Patente und Lizenzen
Heraeusstrasse 12- 14, D-6450 Hanau (DE)**

## Beschreibung

Erfindung bezieht sich auf Metallbehälter, insbesondere für den chemischen Apparatebau, bestehend aus einem Außenmantel und einer damit unverrückbar verbundenen Auskleidung aus einem Metall aus der Gruppe Tantal, Titan, Zirkonium, Niob, Molybdän, Wolfram, Platin, Iridium, Palladium, Rhodium und Silber oder einer Legierung auf der Basis eines Metalls dieser Gruppe und ein Verfahren zur Herstellung solcher Metallbehälter.

Aus der DE-PS 11 94 825 sind Metallbehälter mit Titan- oder Zirkonium-Auskleidung bekannt, die durch Stifte in dem Außenmantel gehalten werden, welche mechanisch in dem Außenmantel eingesetzt sind. Bei derartigen Verbindungen treten erhebliche Schwierigkeiten auf, weil Titan, Zirkonium und auch Legierungen dieser Metalle nur schwer mit anderen Metallen verschweißbar sind.

Bekannt sind aus dieser DE-PS 11 94 825 auch Metallbehälter mit Auskleidungen, bei denen die Schrauben zur Befestigung der Auskleidung an dem Außenmantel aus demselben Werkstoff bestehen wie die Auskleidung. Bei dieser Befestigung ist die Gefahr, daß undichte Stellen auftreten sehr erheblich. Es ist erforderlich, daß hier ein sorgfältiges Verschweißen des Schraubenkopfes vorgenommen wird. Wenn der Metallbehälter beispielsweise negativen Drücken ausgesetzt wird (Vakuum), so muß eine Vielzahl von Schrauben verwendet werden, um eine mechanisch sichere Befestigung der Auskleidung zu gewährleisten, wodurch sich das Auftreten undichter Stellen erheblich erhöht.

Aus dieser DE-PS 11 94 825 sind auch Auskleidungen aus Metallplatten bekannt. Diese Metallplatten sind mit Zapfen versehen, die in Öffnungen des Außenmantels hineinragen und mit diesem verschweißt werden müssen. Diese Art der Befestigung von Auskleidungen am Außenmantel ist auf wenige metallische Werkstoffe beschränkt. Titan- oder Zirkoniumauskleidungen können nur sehr schlecht oder gar nicht mit einem metallischen Außenmantel verbunden werden.

Schließlich sind aus dieser DE-PS 11 94 825 auch Auskleidungen für Metallbehälter bekannt, die aus scheibenförmigen oder bänderförmigen Stücken bestehen und in Ausnehmungen auf der Innenfläche des Außenmantels eingesetzt werden und dann mit der Auskleidung verschweißt werden.

Die US-PS 4 026 583 beschreibt die Auskleidung von Stahlrohren für Öl- oder Gasleitungen mit verschiedenen Spezialegierungen, die in Abhängigkeit von der Aggressivität des durch das Rohr geleiteten Fluids ausgewählt werden. Die bevorzugte Wandstärke der Auskleidung ist mit 0,127 bis 2,54 mm angegeben; sie stellt einen Kompromiß zwischen Zerbrechlichkeit bei zu dünner und hohen Kosten bei zu dicker Schicht dar. Die Auskleidung wird infolge einer im Rohrinnern auftretenden Druckerhöhung durch Diffusionsbindung mit dem Rohr metallurgisch verbunden.

Das Prinzip der Diffusionsbindung aufgrund eines erhöhten Innendrucks setzt eine sorgfältige Abstimmung von Innendruck und Festigkeit der den Druck aufnehmenden äußeren Rohrwand voraus, da eine verhältnismäßig schwache Rohrwand bei der Druckbeaufschlagung bersten könnte.

Weiterhin ist aus der DE-OS 19 95 014 ein Verfahren zum Auskleiden von Metallbehältern bekannt, nach dem die in den Behälter eingeführte Auskleidung, beispielsweise aus Titan, bei hohem Innendurck plastisch deformiert und an die Behälterwand angelegt wird. Auch dieses Verfahren stellt verhältnismäßig hohe Anforderungen an die Stabilität der äußeren Behälterwand, da diese den auf sie einseitig ausgeübten Druck auffangen muß.

Aufgabe der Erfindung ist es, einen Metallbehälter durch möglichst gleichmäßige Druckbeaufschlagung mit korrosionsbeständigem Auskleidungsmaterial in verhältnismäßig geringer Stärke ohne einseitige Beanspruchung der Behälterwand zu versehen; die Verwendung der meist sehr teuren korrosionsfesten Werkstoffe soll dabei auf ein Mindestmaß reduziert werden.

Gelöst wird diese Aufgabe für einen Metallbehälter der eingangs charakterisierten Art erfindungsgemäß dadurch, daß die Auskleidung ganzflächig mit dem Außenmantel durch heißisostatisches Pressen verbunden ist und eine Dicke im Bereich zwischen 0,005 und 0,6mm besitzt.

Weitere Merkmale der erfindungsgemäßen Metallbehälter ergeben sich aus den Unteransprüchen 2 bis 8.

Die Herstellung der Metallbehälter erfolgt erfindungsgemäß dadurch, daß die Auskleidung in Form wenigstens eines Dünnbleches oder wenigstens einer Folie durch heißisostatisches pressen in einem Autoklaven bei einem Druck von mindestens 600 bar und einer Temperatur im Bereich von 800 bis 1400 °C während einer Dauer von mindestens 15 Minuten mit dem Außenmantel verbunden wird. Die Auskleidung erfolgt vorzugsweise in Form eines Dünnbleches mit einer Wandstärke von weniger als 0,6 mm oder wenigstens einer Folie mit einer Dicke von weniger als 0,1 mm.

Das heißisostatische Pressen ist an sich bekannt. Durch seine Anwendung zur Befestigung von Auskleidungen am Außenmantel von Metallbehältern bringt es die Vorteile, daß nicht nur die Wandstärke sowie Dicke der Auskleidung auf ein Maß vermindert werden kann, die keine übliche Schweißverbindung mehr zuläßt, sondern daß auch die Auskleidung ganzflächig mit dem Außenmantel verbunden ist, ohne daß durch Stifte, Schrauben oder Platten die mechanische Festigkeit des Außenmantels beeinträchtigt wird. Sowohl an den Stoßstellen oder an der Überlappungen des Auskleidungsmaterials als auch zwischen der Auskleidung und dem Außenmantel wird durch das heißisostatische Pressen eine völlige Gas- und Feuchtigkeitsdichtheit erzielt sowie eine feste Verbindung zwischen den Teilen durch eine Art interatomarer Diffusion. Die erfindungsgemäßen Behälter können daher sowohl unter Korrosionsbedinungen, als Druckbehälter und auch unter Vakuum betrieben werden, ohne daß die Gefahr besteht, daß sich die Auskleidung von dem Außenmantel ablöst oder die Stoß- und Überlappungsstellen als Auskleidungsmaterial spröde und rißig werden.

Anhand der Figuren 1 bis 4 werden Ausführungsbeispiel erfindungsgemäßer Metallbehälter und deren Herstellung erläutert. Es zeigen:

Figur 1: einen Vertikalschnitt durch einen Metallbehälter

Figur 2: einen Vertikalschnitt durch einen Metallbehälter mit Stutzen

Figur 3: einen Vertikalschnitt durch einen Metallbehälter mit doppelschichtiger Auskleidung

Figur 4: einen Vertikalschnitt durch einen Metallbehälter mit einer Auskleidung aus unterschiedlichen Werkstoffen, unter Verwendung einer Haftverbesserungsschicht.

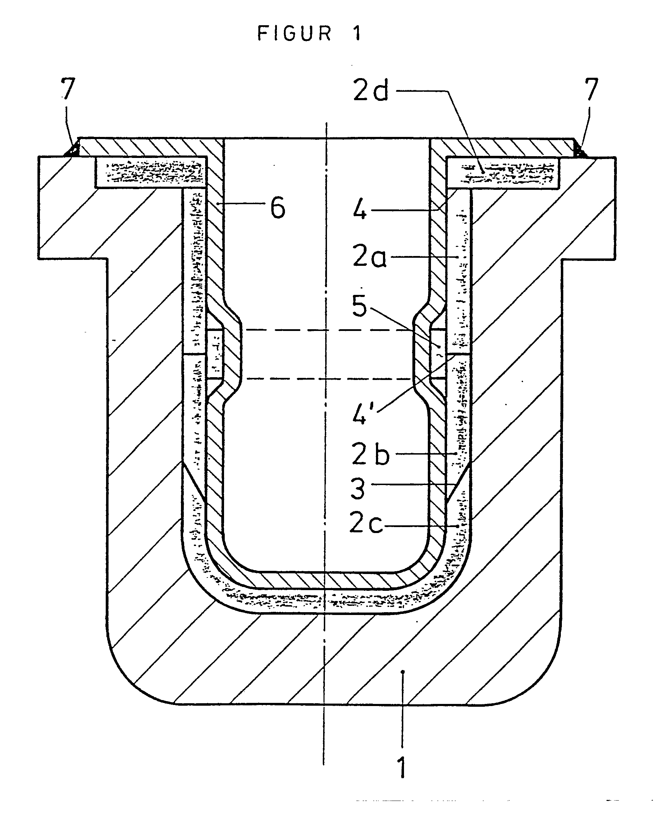

Gemäß der Figur 1 besteht der Metallbehälter aus einen Außenmantel 1, der im Ausführungsbeispiel aus Stahl besteht, und einer Auskleidung aus Molybdän, die in diesem Ausführungsbeispiel aus Dünnblechen 2a bis 2d besteht. Zur Herstellung des erfindungsgemäßen Metallbehälters wird das Dünnblechbodenteil 2c in den Außenmantel eingebracht, danach die Dünnblechteile 2b und 2a. Die Wandstärke der Dünnblechteile 2a und 2b sind im Ausführungsbeispiel 0,3 mm, die des Außenmantels 20 mm. Wie aus Figur 1 ersichtlich, überlappen sich die Kanten 3 vom Bodenteil 2c und Dünnblechteil 2b, während die Kanten 4 und 4′ der Dünnblechteile 2a und 2b und 2d aneinanderstoßen. Die Stoßkanten 4′ sind in dem Ausführungsbeispiel noch mit einer Manschette 5 aus Molybdän überdeckt. Nach dem Einbringen der Dünnblechteile in dem Außenmantel wird das Kapselteil 6 angebracht, das in dem Ausführungsbeispiel ebenfalls aus Stahl besteht. Es ist an den Stellen 7 mit dem Außenmantel 1 verschweißt. Der so vorbereitete teilweise gekapselte Metallbehälter wird danach in einem an sich bekannten zum heißisostatischen Pressen verwendeten Autoklaven eingebracht und in diesem einem Druck von beispielsweise 2000 bar und einer Temperatur von 1340° C, während einer Zeitdauer von 90 Minuten ausgesetzt. Durch das heißisostatische Pressen wird die Auskleidung 2a bis 2d ganzflächig mit dem Außenmantel 1 verbunden, außerdem erfolgt eine Verbindung der Auskleidungsdünnbleche 2a bis 2c an den Verbindungsstellen 3, 4 und 4′, sowie eine Verbindung der Manschette 5 mit den Auskleidungsteilen 2b und 2a. Mach dem heißisostatischen Pressen läßt man den Metallbehälter in Autoklaven abkühlen. Nach erfolgter Abkühlung wird das Kapselteil 6 beispielsweise spanabhebend entfernt. Man erhält dann einen Metallbehälter, der aus dem Außenmantel aus Stahl besteht, der mit einer Dünnblechauskleidung aus Molybdän versehen ist.

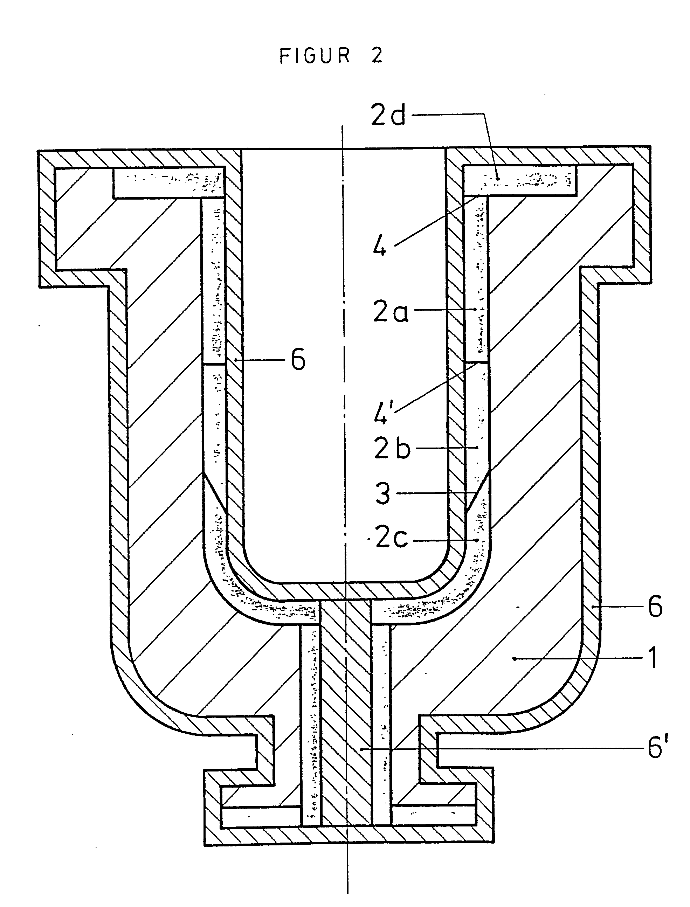

Das in Figur 2 dargestellte Ausführungsbeispiel unterscheidet sich von dem in Figur 1 dargestellten Metallbehälter im wesentlichen dadurch, daß auf eine Abdeckungsmanschette 5 verzichtet wurde, aber der Boden des Metallbehälters mieinem ausgekleideten Stutzen versehen ist. Ferner ist der Metallbehälter vollständig eingekapselt. Der Außenmantel 1 bestehtwiederum aus Stahl, für die Auskleidung wird als Werkstoff Tantal verwendet. Die Kapselteile 6 und 6′ bestehen aus Kupfer, welches nach dem heißisostatischen Preßverfahren abgebeizt wird, vorteilhafterweise mit Salpetersäure.

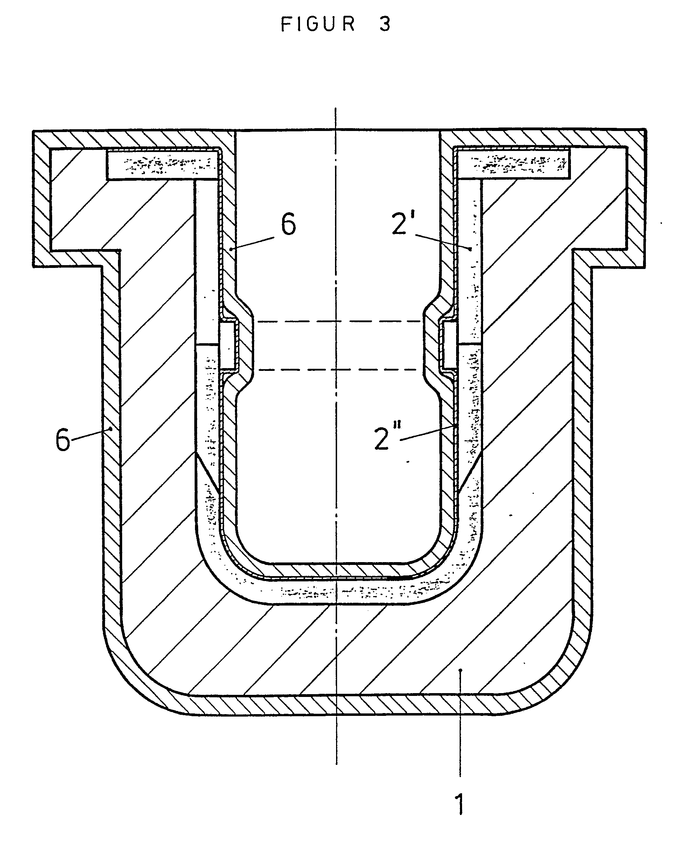

In dem Ausführungsbeispiel gemäß Figur 3 ist wiederum ein Stahlaußenmantel 7 vorgesehen. Hier ist aber die Auskleidung aus zwei unterschiedlichen Werkstoffen hergestellt, die übereinander geschichtet sind und zwar besteht die an den Außenmantel 1 anliegende Schicht 2′aus Tantal, die mit einer Schicht 2″ aus Platin bedeckt ist. Die Schicht 2′ besteht aus Tantaldünnblechen mit einer Wandstärke von 0,2 mm, die Schicht 2″ aus einer Platinfolie, die eine Dicke von 0,05 mm besitzt.

Als Kapselmaterial 6 wird Kupfer verwendet, das den Metallbehälter vollständig umhüllt und nach dem heißisostatischen Pressen abgebeizt wird. Das heißisostatische Pressen wird bei einem Druck von 7300 bar, einer Temperatur von 940° C während einer Dauer von 30 Minuten durchgeführt.

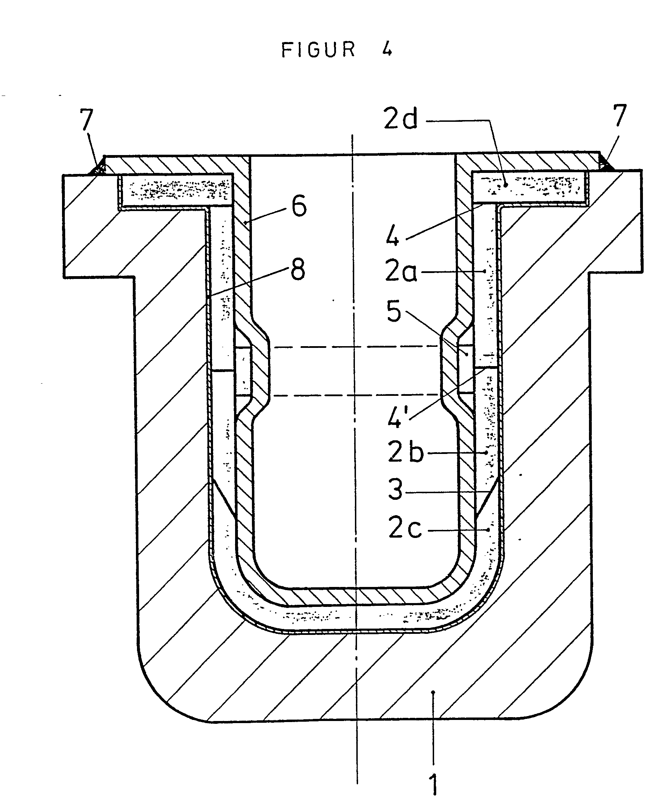

In der Figur 4 ist ein Ausführungsbeispiel dargestellt, bei dem zwischen Auskleidung und dem Außenmantel 1 eine Haftverbesserungsschicht 8 angeordnet ist. In diesem Ausführungsbeispiel besteht der Außenmantel 1 aus einem mehr als 1 % Silizium enthaltendem Stahl, die Auskleidung 2 aus Tantal und die Haft-verbesserungsschicht 3 aus Hickel. Die Kapsel 6 besteht aus Kupfer. Das heißisostatische Pressen erfolgt bei einem Druck von 1500 bar, einer Temperatur von 920° C während einer Dauer von 90 Minuten. Die Entfernung des Kapselmaterials nach dem heißisostatischen Pressen und Abkühlen erfolgt durch Beizen.

## Patentansprüche

1. Metallbehälter, insbesondere für den chemischen Apparatebau, bestehend aus einem Außenmantel und einer damit unverrückbar verbundenen Auskleidung aus einem Metall aus der Gruppe Tantal, Titan, Zirkonium, Niob, Molybdän, Wolfram, Platin, Iridium, Palladium, Rhodium und Silber oder einer Legierung auf das Basis eines Metalls dieser Gruppe, dadurch gekennzeichnet, daß die Auskleidung ganzflächig mit dem Außenmantel durch heißisostatisches Pressen verbunden ist und eine Dicke im Bereich zwischen 0,005 und 0.6 mm besitzt.

2. Metallbehälter nach Anspruch 1, dadurch gekennzeichnet, daß die Auskleidung aus mehreren stoßend oder überlappend miteinander verbundenen Dünnblech- oder Folienteilen besteht.

3. Metallbehälter nach einem der Ansprüche 1 oder 2, dadurch gekennzeichnet, daß die Auskleidung aus Bereichen unterschiedlicher Werkstoffe besteht.

4. Metallbehälter nach einem der Ansprüche 1 bis 3, dadurch gekennzeichnet, daß die Auskleidung doppelschichtig ausgebildet ist und aus zwei unterschiedlichen Werkstoffen besteht.

5. Metallbehälter nach einem der Ansprüche 1 bis 3, dadurch gekennzeichnet, daß zwischen der Auskleidung und dem Außenmantel eine Haftverbesserungsschicht aus Gold, Kupfer oder Nickel vorgesehen ist.

6. Metallbehälter nach einem der Ansprüche 1 bis 5, dadurch gekennzeichnet, daß der Außenmantel aus Stahl und die Auskleidung aus Tantal oder Molybdän besteht.

7. Verfahren zur Herstellung von Metallbehältern nach einem der Ansprüche 1, 2, 5 oder 6, dadurch gekennzeichnet, daß die Auskleidung in Form wenigstens eines Dünnbleches oder wenigstens einer Folie durch heißisostatisches Pressen in einem Autoklaven bei einem Druck von mindestens 600 und einer Temperatur im Bereich von 800 bis 1400 °C während einer Dauer von mindestens 15 Minuten mit dem Außenmantel verbunden wird.

8. Verfahren nach Anspruch 7, dadurch gekennzeichnet, daß die Stoßstellen mit einer Manschette aus Auskleidungswerkstoff vor dem heißisostatischen Pressen abgedeckt werden.

## Claims

1. Metal container, in particular for construction of chemical apparatus, comprising an outer jacket and a lining immovably joined thereto and consisting of a metal of the group tantalum, titanium, zirconium, niobium, molybdenum, tungsten, platinum, iridium, palladium, rhodium and silver or of an alloy based on a metal of this group, characterised in that the lining is joined throughout its area to the outer jacket by hot isostatic compression and has a thickness in the range of between 0.005 and 0.6 mm.

2. Metal container according to claim 1, characterised in that the lining comprises several fine-gauge sheet or foil elements joined together by butt joints or lap joints.

3. Metal container according to one of the claims 1 or 2, characterised in that the lining comprises sections of different materials.

4. Metal container according to one of the claims 1 to 3, characterised in that the lininq is of twin-layer structure and consists of two different materials.

5. Metal container according to one of the claims 1 to 3, characterised in that a layer consisting of gold, copper or nickel is provided to improve adhesion between the lining and the outer jacket.

6. Metal container according to one of the claims 1 to 5, characterised in that the outer jacket consists of steel and the lining of tantalum or molybdenum.

7. Method for producing metal containers according to one of the claims 1, 2, 5 or 6, characterised in that the lining having the form of at least one thin-gauge sheet or of at least one foil is bonded to the outer jacket by hot isostatic compression in an autoclave under a pressure of at least 600 bar and at a temperature in the region of 800 to 1400°C for a period of at least 15 minutes.

8. Method according to claim 7, characterised in that the joints are covered by a sleeve of lining material prior to the hot isostatic pressing operation.

## Revendications

1°) Récipient métallique, en particulier pour l'industrie chimique, constitué d'une enveloppe extérieure et d'un revêtement, qui lui est immuablement lié, en un métal du groupe tantale, titane, zirconium, niobium, molybdène, tungstène, platine, iridium, palladium, rhodium et argent ou un alliage à base d'un métal de ce groupe, caractérisé en ce que le revêtement est lié sur toute la surface à l'enveloppe extérieure par le procédé par pression isostatique à chaud et présente une épaisseur sur la plage allant de 0,005 à 0,6 mm.

2°) Récipient métallique selon la revendication 1, caractérisé en ce que le revêtement est constitué de plusieurs parties, en tôle mince ou en feuille, reliées l'une à l'autre par joint bord à bord ou par joint à recouvrement.

3°) Récipient métallique selon l'une des revendications 1 ou 2, caractérisé en ce que le revêtement est constitué de zones de matériaux différents.

4°) Récipient métallique selon l'une des revendications 1 à 3, caractérisé en ce que le revêtement est conçu à double couche et en ce qu'il est constitué de deux matériaux différents.

5°) Récipient métallique selon l'une des revendications 1 à 3, caractérisé en ce qu'entre le revêtement et l'enveloppe extérieure est prévue une couche d'amélioration d'adhérence en or, cuivre ou nickel.

6°) Récipient métallique selon l'une des revendications 1 à 5, caractérisé en ce que l'enveloppe extérieure est en acier et le revêtement en tantale ou en molybdène.

**0 082 920**

7°) Procédé pour la fabrication de récipient métalliques selon l'une des revendications 1, 2, 5 ou 6, caractérisé en ce que le revêtement, sous forme d'au moins une tôle mince ou d'au moins une feuille, est lié à l'enveloppe extérieure par le procédé par pression isostatique à chaud, dans un autoclave, sous une pression d'au moins 600 bars et une température de la plage allant de 800 à 1400 °C pendant une durée d'au moins 15 minutes.

8°) Procédé selon la revendication 7, caractérisé en ce que les joints bord à bord sont recouverts d'une manchette de matériau de revêtement avant le processus par pression isostatique à chaud.

# FIGUR 1

FIGUR 2

FIGUR 3

FIGUR 4